# EUROPEAN PATENT SPECIFICATION

(11) **EP 2 769 876 B1**
(45) Date of publication and mention of the grant of the patent: **16.09.2015**
(21) Application number: 13460050.1
(22) Date of filing: 24.07.2013
(51) Int. Cl.: B60N 2/28

(54) **Motor car chair for a child**
Kraftfahrzeugsitz für ein Kind
Siège de voiture automobile pour un enfant

(30) Priority: 26.02.2013 PL 40291713
(43) Date of publication of application: 27.08.2014
(73) Proprietor: Firma LOOKART Eksport Import Lukasz Karwala, 42-130 Wreczyca Wielka (PL)
(72) Inventor: Karwala, Lukasz, 42-130 Wreczyca Wielka (PL)
(74) Representative: Budzinski, Slawomir

(56) References cited:
- WO-A2-2006/128615
- US-A1- 2005 110 318

## Description

It is the object of the invention to provide a motor car chair for a child, to be fastened on the bottom seat of a car seat.

Known are motor car chairs for a child, mounted on a bottom seat of a motor car, comprising a bottom seat, i.e. a chair shell, fastened to a base which is a base mounted on a car seat by means of clamping systems that clamp the chair shell to the base. The base is fastened on a car seat by means of the isofix system, car seat belts or in some other way. The chair shell may be detached from the base and this operation does not require disassembling of the base from the car seat. The child is supported in the chair shell by means of internal belts - mounted to the chair shell.

A motor car chair for a child is known as presented in patent document CA 2558978. The chair comprises: a bottom seat frame with a backrest with a slot for internal seat belts of the chair that limit the seat occupied by a child, a bottom seat frame comprising an energy-absorbing element operationally connected to the slot so as to reduce the amount of force of the internal belt affecting the child occupying the chair during sudden braking. In the invention several slots are contemplated in the chair frame through which slots the internal belt may be threaded.

An seat for a child is known to be used in vehicles as presented in patent document EP 1059194. It comprises a chair body with a first and second side surfaces, where the first abutting surface extends between the side surfaces and is arranged to abut the cushion of the bottom seat of the car seat, while the other abutting surface extends between the side surfaces and is arranged to abut the backrest of the car vehicle seat.

A motor car chair for a child is known intended for small infants, as presented in patent document EP 1470952. The chair comprises a frame mounted on the bottom seat of a vehicle seat and a rear bracket which may be rotated relative to the frame. The seat of the vehicle comprises a part that constitutes a bottom seat and a backrest. The lower part of the rear chair bracket positioned at the frame is movable relative to the frame, in the directions towards and from the rear part of the vehicle. The rear bracket is upright in a first position where at the lower part of the rear bracket it is located near the rear part of the vehicle and it is inclined in a second position where at the lower part of the rear bracket it is spaced from the rear part of the vehicle.

A securing frame is known for a motor car seat for a child, as presented in patent document EP 1517810. The frame is provided with anchoring elements connected to the chair and rigidly coupled with the base and/or the bottom seat of the vehicle seat. The anchoring elements may be released from the coupling with the anchoring elements of the infant chair affixed to the vehicle by means of links connected together with a transverse bar and the latter is coupled with a pulling handle for detachment.

A motor car chair is known as presented in patent document FR 2957313. The chair is provided with a footing integrated with a vehicle seat in one mounting position. The chair along with a base and backrest takes a front or rear position relative to the footing. Pairs of two fastening elements are arranged symmetrically in a manner that one pair of first fastening elements interacts with a second pair of first fastening elements in a position oriented backwards relative to the direction of driving, where the second pair of first fastening elements interacts with the first pair of second fastening elements.

A system is known for holding a child in a chair as presented in patent document US 5567008. The system comprises a base mounted to a motor car seat and a carrycot for an infant, comprising a chair shell assembled with the base by means of a clamp arm. The clamp arm is movable so as to disengage the shell from the base, and for this purpose a release button mounted on the shell is provided.

A system is known for coupling a carrycot for infants to another device that constitutes a base, as presented in patent document US 5772279. The system comprises a carrycot that comprises coupling means extending from a side of the carrycot, and the coupling means form mounting pockets. The devices that constitute the base, such a pram or a vehicle chair, have coupling posts arranged for the mounting pockets of the carrycot.

A chair for a child is further known to be mounted on a motor car seat as presented in patent document US 6592183. The chair comprises a first pair of apertures and a second pair of apertures. The vehicle anchoring system comprises an anchoring system for coupling a pair of anchoring mounting elements used in the vehicle seat or in the vicinity thereof. The vehicle anchoring system comprises a securing belt that has a central part and opposite end parts as well as a fastener coupled with each of the end parts, arranged to couple one of the mounting elements. The vehicle anchoring system also comprises a leash coupled with the chair and the central part of the securing belt. The leash remains coupled with the chair and the securing belt, while the securing belt is moved between the first and second aperture of the chair.

A motor car chair is known as presented in patent document US 6428099. The car vehicle chair for a child is releasably mounted to the base adapted for a motor car seat. The chair may be positioned in an upright or inclined position, and additionally it may comprise a compartment for housing small accessories.

A motor car chair is known as presented in patent document US 6692073. This is a chair/carrycot for an infant arranged in a motor car so as to enable swinging thereof.

A motor car chair is known as presented in patent document US 2007176477. This is an infant chair where the harness for holding the infant is fastened relative to the vehicle through a mounting system independent of any chair framework. Preferably, the chair itself is mounted to a motor car seat. There is also disclosed a set with a chair structure that has a slot through which internal belts may be threaded which constitute the harness. The harness, advantageously, comprises an internal main belt which is looped behind the chair through a pair of slots so as to provide surrounding the infant with two internal shoulder belts. Multiple pairs of slots provide a possibility to change the height of the internal shoulder belts. The chair is fastened with the internal belts to the vehicle seat. This set has no chair base. The chair has an additional internal belt loop that holds the chair.

There is known a lower anchoring connection for fastening an infant chair to anchoring clamps of a vehicle, as presented in patent document US 2010033001. In this connection, a single drawing in element comprises an extendable arm connected with an internal belt of the chair that has at its opposite ends coupling elements to lock anchoring loops. A release button on the drawing in element, upon being pressed, enables retraction of the arm of the drawing in element when maintaining the coupling elements in the vicinity of the infant chair in a storage position.

In the known solutions for motor car chairs for a child, mounted on a motor car seat, the force of inertia acting on a child during an accident is transferred to the internal belts, then to the chair shell, next to the base and only then to the structure of the vehicle.

A safety child seat for vehicle according to the preamble of claim 1 is known from US 2005110318.

It is the purpose of this invention to provide a chair where the path of transfer of the force of inertia, during an accident, is shorter, and thus safety of the child being carried is enhanced.

A vehicle chair for a child, according to the invention, is mounted on a motor car seat and has a base where clamping catches are positioned, and a shell bottom seat. The bottom seat has internal belts for the child, having two shoulder segments extending in the space of the bottom seat intended for the child and passing to the other side of the bottom seat and there connected to a tensioning belt by a tensioner, and in the space of the bottom seat intended for a child it has a connecting crotch element provided with a clamp for internal belts. The fastening part of the connecting crotch element is provided with a handle, positioned at the opposite side of the bottom seat relative to the side of the bottom seat intended for a child, and the belt tensioner of the chair is provided with a connector. The handle of the fastening element of the connecting crotch element and the tensioner connector are coupled with clamp catches of the chair base, when the bottom seat is seated in the base.

Preferably, the chair base is mounted to a motor car seat by means of an isofix system as defined by the applicable international standards and used by numerous manufacturers of automotive vehicles.

Also preferably, the chair base is mounted to a motor car seat by means of safety belts the motor car is equipped with.

Also preferably, the connecting crotch element is a belt.

Also preferably, the clamp catches have claw elements, are rotatable on shafts, and are released by springs, where the tensioner connector and the handle of the fastening element of the crotch belt have a cross-section that cooperates with clamp catches in a circular shape.

Also preferably, the chair base is provided with longitudinal side channels, where the central part thereof, at the side corresponding to the bottom seat the backrest has a projection of a cylinder-like shape the axis of which extends transversely to the longitudinal axis of the bottom seat, where longitudinal rails of the bottom seat enter channels of the base and the protrusion of the base enters a recess of the bottom seat during positioning the bottom seat in the chair base.

The object of the invention is presented by an embodiment in the drawing, where Fig. 1 shows a motor car chair for a child in exploded side view, which means that a chair base is positioned on a motor car seat with a bottom seat of the chair above before the chair is clamped in the base; Fig 2 shows a section of a segment of the chair illustrating fastening of a handle of a connecting crotch element in a clamp catch of the bottom seat; and Fig. 3 shows a section of a chair segment, illustrating fastening of a tensioner connector in a clamp catcher of a bottom seat.

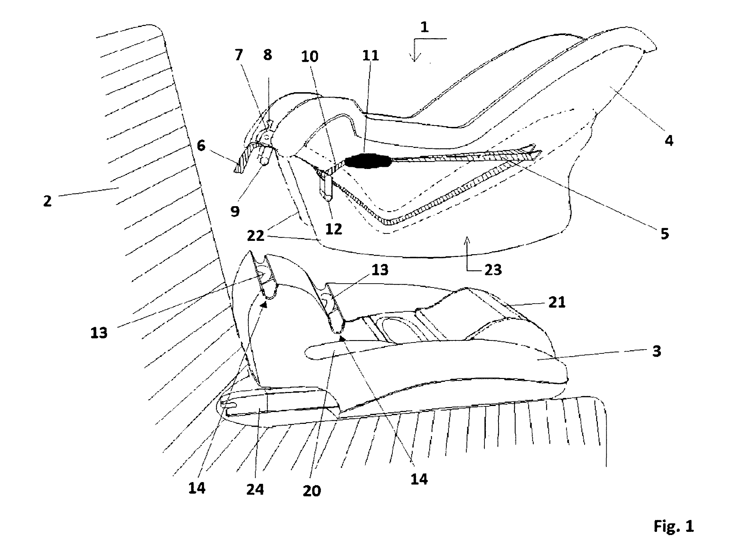

A motor car chair 1 is intended to be mounted on a car seat 2. As shown in Fig. 1, a chair 1 comprises a base 3 and a bottom seat 4. It is provided with internal belts 5 for a child, where two shoulder segments extend in a bottom seat space 4, intended for a child, and pass to the other side of the bottom seat 4 where they are connected with a tensioning belt 6 threaded through a tensioner 7.

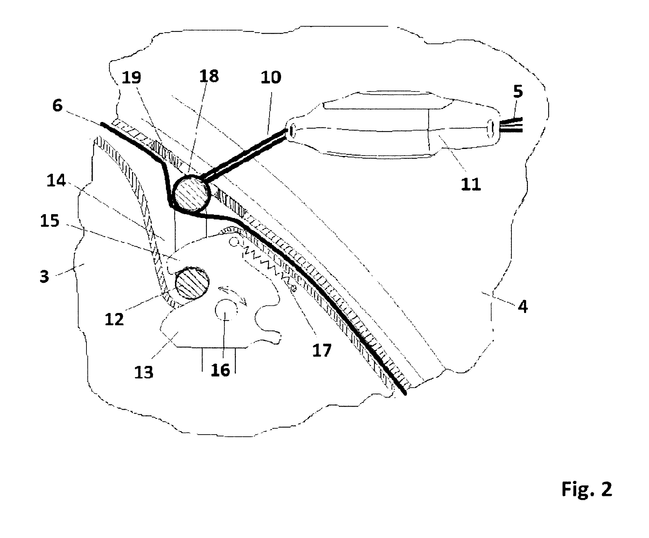

As shown in Fig. 1 and Fig. 2, a handle 12 of a fastening part of a connecting crotch element 10 and a connector 9 of the tensioner 7 are coupled with clamping catches 13 of the base 3 of the chair 1 when the bottom seat 4 is set in the base 3. Clamping catches 13 are positioned in recesses of the base 4. Clamping catches 13 have claw elements 15 that rotate on shafts 16 and are released by springs 17.

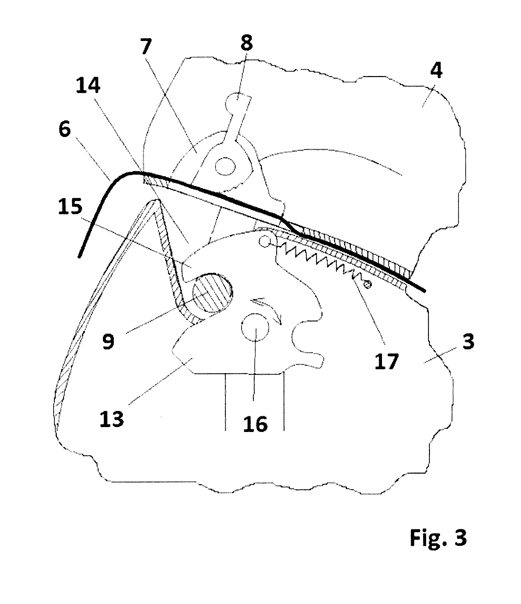

As shown in Figs. 1 and 3, the tensioner 7 is provided with a lever 8 of the tensioner 7 and the connector 9. In the space of the bottom seat 4, intended for a child, there is a connecting crotch element 10 in a form of a belt, provided with a clamp 11 for internal belts 5, and the fastening part of the connecting crotch element 10 is connected to a handle 12, positioned at the opposite side of the bottom seat 4 to the side of the bottom seat 4 intended for a child.

As shown in Fig. 2, the handle 12 of the fastening part of the connecting crotch element 10 has is in the cross-section cooperating with the clamping catch 13 a circular shape.

As shown in Fig. 3, the connector 9 of the tensioner 7 has in the cross-section cooperating with the clamping catch 13 a circular shape. Connecting crotch element 10 passes through an opening 18 in the bottom seat 4 and around the opening 18 there is a reinforcement 19 of the bottom seat 4.

Base 3 of the chair 1, as shown in Fig. 1, is provided with longitudinal side channels 20 and the central part thereof at the side corresponding to the backrest of the bottom seat 4 is provided with a protrusion 21 of a cylinder-like shape the axis of which extends transversely to the longitudinal axis of the base 3, and the bottom seat 4 of the chair 1 is provided with longitudinal rails 22 and a recess 23 of a cylinder-like shape the axis of which extends transversely to the longitudinal axis of the bottom seat 4, and the longitudinal rails 22 of the bottom seat 4 enter channels 20 in the base 3, while the protrusion 21 of the base 3 enters the recess 23 of the bottom seat 4 during seating the bottom seat 4 in the base 3 of the chair 1. The base 3 of the chair 1 is mounted on a motor car seat 2 by means of an isofix system device 24.

Base 3 of the chair 1 may be of course mounted to a motor car seat 2 by means of safety belts of the motor car or other technical means.

Mounting of the bottom seat 4 of the chair 1 on the base 3 is effected with the use of a handle 12 connected to the connecting crotch element 10 and the connector 9, coupled with the tensioning belt 6 which is linked with internal belts 5 of the chair 1. As a result, in the case of high overloading as may occur during sharp braking or collision, the transferred force of inertia (child - belts of the chair 1 (internal shoulder belts, crotch belt and tensioning belt) - base 3 - motor car structure) bypasses the bottom seat 4 of the chair 1 and from the belts of the chair 1 is transferred to the base 3. This shortened path of transfer of the force of inertia, affecting the child during an accident, enhances safety of the child in the chair 1. Moreover, the structure of the bottom seat 4 of the chair 1 is not a system element that provides safety during an accident, and therefore it may be formed of any suitable material such as for example dense Styrofoam that determines inter alia low mass of the chair 1 which provides another advantage, i.e. makes it easier to carry a child in the chair 1 outside the motor car.

## Claims

1. A motor car chair (1) for a child, mounted on a motor car seat (2), comprising a base (3) where clamping catches (13) and a shell bottom seat (4) are positioned, said bottom seat (4) comprising internal belts (5) for a child said belts (5) having two shoulder segments extending within the space of the bottom seat (4) intended for a child and passing to the other side of the bottom seat (4) and there being linked with a tensioning belt (6) that passes through a tensioner (7), and in the space of the bottom seat (4) intended for a child a connecting crotch (10) element provided with a internal belt clamp (11), a fastening part of a connecting crotch element (10) is provided with a handle (12) positioned at the opposite side of the bottom seat (4) than a side of the bottom seat (4) intended for a child, **characterized in that** the tensioner (7) of the belts (5) of the chair (1) is provided with a connector (9), where the handle (12) of the fastening part of the connecting crotch element (10) and the connector (9) of the tensioner (7) are coupled with clamping catches (13) of the base (3) of the chair (1) upon setting of the bottom seat (4) on the base (3).

2. A chair according to claim 1, **characterized in that** the base (3) of the chair (1) is mounted to a motor car seat (2) by means of an isofix system device (24).

3. A chair according to claim 1, **characterized in that** the base (3) of the chair (1) is mounted to a motor car seat (2) by means of the motor car belts.

4. A chair according to claim 1, **characterized in that** the connecting crotch element (10) is a belt.

5. A chair according to claim 1, **characterized in that** the clamping catches (13) have claw elements (15), are rotatable on shafts (16) and are released by springs (17) and the connector (9) of the tensioner (7) and the handle (12) of the fastening part of the connecting crotch element (10) have in the cross-section cooperating with the clamping catches (13) a circular shape.

6. A chair according to claim 1, **characterized in that** the base (3) of the chair (1) is provided with longitudinal side channels (20) and the central part thereof at the side corresponding to the backrest of the bottom seat (4) is provided with a protrusion (21) of a cylinder-like shape the axis of which extends transversely to the longitudinal axis of the base (3) and the bottom seat (4) of the chair (1) is provided with longitudinal rails (22) and with a recess (23) of a cylinder-like shape the axis of which extends transversely to the longitudinal axis of the bottom seat (4), where the longitudinal rails (22) of the bottom seat (4) enter the channels (20) of the base (3) and the protrusion (21) of the base (3) enters the bottom seat recess (23) when the bottom seat (4) is set on the base (3) of the chair (1).

## Patentansprüche

1. Kraftfahrzeugsitz (1) für ein Kind, der auf einem Kraftfahrzeugsitz (2) befestigt wird, umfassend eine Basis (3), an der Schnappverschlüsse (13) und eine untere Sitzschale (4) angeordnet sind, wobei die Sitzschale (4) innere Gurte (5) für ein Kind aufweist, wobei die genannten Gurte (5) zwei Schulterabschnitte aufweisen, die sich im Raum der unteren Sitzschale (4) erstrecken, der für das Kind vorgesehen ist, und auf die andere Seite der unteren Sitzschale (4) hinüberreichen und dort mit einem Spanngurt (6) verbunden sind, der durch einen Spanner (7) verläuft, und wobei sich im für das Kind vorgesehenen Raum der unteren Sitzschale (4) ein Verbindungselement (10) des Schrittbereichs befindet, das mit einer Klammer (11) der inneren Gurte ausgerüstet ist, und der Befestigungsteil des Verbindungselements (10) des Schrittbereichs mit einem Griff (12) ausgerüstet ist, der auf der anderen Seite der unteren Sitzschale (4) angeordnet ist, als die für das Kind vorgesehene Seite der unteren Sitzschale (4), **dadurch gekennzeichnet, dass** der Spanner (7) der Gurte (5) des Sitzes (1) mit einem Verbindungsstück (9) ausgerüstet ist, wobei der Griff (12) des Befestigungsteils des Verbindungselements (10) des Schrittbereichs und das Verbindungsstück (9) des Spanners (7) nach dem Aufsetzen der unteren Sitzschale (4) auf die Basis (3) mit Schnappverschlüssen (13) der Basis (3) des Sitzes (1) verbunden werden.

2. Sitz nach Anspruch 1, **dadurch gekennzeichnet, dass** die Basis (3) des Sitzes (1) mittels einer Isofix-System-Vorrichtung (24) auf einem Kraftfahrzeugsitz (2) befestigt wird.

3. Sitz nach Anspruch 1, **dadurch gekennzeichnet, dass** die Basis (3) des Sitzes (1) mittels der Kraftfahrzeugsicherheitsgurte auf einem Kraftfahrzeugsitz (2) befestigt wird.

4. Sitz nach Anspruch 1, **dadurch gekennzeichnet, dass** das Verbindungselement (10) des Schrittbereichs ein Gurt ist.

5. Sitz nach Anspruch 1, **dadurch gekennzeichnet, dass** die Schnappverschlüsse (13) Klauenelemente (15) aufweisen, auf Wellen (16) drehbar sind und mittels Federn (17) freigegeben werden, und das Verbindungsstück (9) des Spanners (7) und der Griff (12) des Befestigungsteils des Verbindungselements (10) des Schrittbereichs in dem mit den Schnappverschlüssen (13) zusammenwirkenden Querschnitt kreisförmig sind.

6. Sitz nach Anspruch 1, **dadurch gekennzeichnet, dass** die Basis (3) des Sitzes (1) mit länglichen seitlichen Kanälen (20) ausgerüstet ist und ihr mittlerer Teil auf der der Lehne der unteren Sitzschale (4) entsprechenden Seite mit einem Vorsprung (21) mit einer zylinderähnlichen Form ausgerüstet ist, dessen Achse sich quer zur Längsachse der Basis (3) erstreckt, und die untere Sitzschale (4) des Sitzes (1) mit länglichen Schienen (22) und einer Ausnehmung (23) mit einer zylinderähnlichen Form ausgerüstet ist, deren Achse sich quer zur Längsachse der unteren Sitzschale (4) erstreckt, wobei die länglichen Schienen (22) der unteren Sitzschale (4) in die Kanäle (20) der Basis (3) eingreifen und der Vorsprung (21) der Basis (3) in die Ausnehmung (23) der unteren Sitzschale eingreift, wenn die untere Sitzschale (4) auf die Basis (3) des Sitzes (1) aufgesetzt wird.

## Revendications

1. Siège de voiture automobile (1) pour un enfant, monté sur un siège de véhicule automobile (2), comprenant une base (3) où des prises d'encliquetage (13) et un siège bas (4) coque sont disposés, ledit siège bas (4) comprenant des ceintures intérieures (5) pour un enfant, lesdites ceintures (5) présentant deux segments d'épaule qui s'étendent dans l'espace, destiné à un enfant, du siège bas (4) et qui passent vers l'autre côté du siège bas (4) et qui sont reliées là à une ceinture de tension (6) qui passe à travers un tendeur (7), et dans l'espace, destiné à un enfant, du siège bas (4), un élément d'entrejambes de raccordement (10), muni d'une pince de ceintures intérieures (11), une partie de fixation de l'élément d'entrejambes de raccordement (10) est munie d'une poignée (12) positionnée du côté opposé du siège bas (4) par rapport au côté du siège bas (4) destiné à un enfant, **caractérisé en ce que** le tendeur (7) des ceintures (5) du siège (1) est muni d'un connecteur (9), où la poignée (12) de la partie de fixation de l'élément d'entrejambes de raccordement (10) et le connecteur (9) du tendeur (7) sont couplés aux prises d'encliquetage (13) de la base (3) du siège (1) après l'installation du siège bas (4) sur la base (3).

2. Siège selon la revendication 1, **caractérisé en ce que** la base (3) du siège est montée sur un siège de véhicule automobile (2) au moyen d'un appareil de système isofix (24).

3. Siège selon la revendication 1, **caractérisé en ce que** la base (3) du siège est montée sur un siège de véhicule automobile (2) au moyen des ceintures de véhicule automobile.

4. Siège selon la revendication 1, **caractérisé en ce que** l'élément d'entrejambes de raccordement (10) est une ceinture.

5. Siège selon la revendication 1, **caractérisé en ce que** les prises d'encliquetage (13) ont des éléments à griffes (15), pivotent sur des arbres (16) et sont relâchées par des ressorts (17), et le connecteur (9) du tendeur (7) et la poignée (12) de la partie de fixation de l'élément d'entrejambes de raccordement (10) ont dans la section transversale coopérant avec les prises d'encliquetage (13) une forme circulaire.

6. Siège selon la revendication 1, **caractérisé en ce que** la base (3) du siège (1) est munie des canaux latéraux longitudinaux (20), et la partie centrale de celui-ci du côté correspondant au dossier du siège bas (4) est munie d'une partie saillante (21) d'une forme cylindrique dont l'axe s'étend transversalement à l'axe longitudinal de la base (3), et le siège bas (4) du siège (1) est muni des rails longitudinaux (22) et d'un creux (23) d'une forme cylindrique dont l'axe s'étend transversalement à l'axe longitudinal du siège bas (4), où les rails longitudinaux (22) du siège bas (4) entrent dans les canaux (20) de la base (3) et la partie saillante (21) de la base (3) entre dans le creux (23) du siège bas quand le siège bas (4) est fixé sur la base (3) du siège (1).
